# EUROPÄISCHE PATENTSCHRIFT

(11) **EP 1 129 927 B1**
(45) Veröffentlichungstag und Bekanntmachung des Hinweises auf die Patenterteilung: **27.07.2005**
(21) Anmeldenummer: 01102760.4
(22) Anmeldetag: 08.02.2001
(51) Int. Cl.: B62D 25/14, F16B 5/02, B62D 65/14

(54) **Instrumententafelanordnung an einem Fahrzeug, insbesondere an einem Kraftfahrzeug, sowie Verfahren zur Montage einer Instrumententafelanordnung**
Mounting of a vehicle dashboard , especially a motor vehicle, and method of assembly of a dashboard
Montage d'un tableau de bord de véhicule, spécialement à moteur et procédé de montage d'un tableau de bord

(30) Priorität: 04.03.2000 DE 10010749
(43) Veröffentlichungstag der Anmeldung: 05.09.2001
(73) Patentinhaber: Volkswagen Aktiengesellschaft, 38436 Wolfsburg (DE)
(72) Erfinder: Emmerich, Richard, 38557 Osloss (DE); Hachfeld, Rudolf, 38444 Wolfsburg (DE)

(56) Entgegenhaltungen:
- FR-A- 2 791 314
- US-A- 5 387 023
- PATENT ABSTRACTS OF JAPAN vol. 018, no. 424 (M-1652), 9. August 1994 (1994-08-09) & JP 06 127290 A (NISSAN MOTOR CO LTD), 10. Mai 1994 (1994-05-10)

## Beschreibung

Die Erfindung betrifft eine Instrumententafelanordnung an einem Fahrzeug, insbesondere an einem Kraftfahrzeug, nach dem Oberbegriff des Anspruchs 1 sowie ein Verfahren zur Montage einer Instrumententafelanordnung nach dem Oberbegriff des Anspruchs 11.

Aus DE 42 328 47 ist eine Instrumententafelanordnung an einem Kraftfahrzeug bekannt, das einen im montierten Zustand in etwa in Fahrzeugquerrichtung verlaufenden Montagequerträger umfasst. An dem Montagequerträger ist eine Instrumententafel mittels wenigstens einer Halteeinrichtung gehaltert, wobei die Instrumententafelanordnung an in Fahrzeugquerrichtung gesehen gegenüberliegenden Seiten über je ein Anschlussmittel am Fahrzeugaufbau festlegbar ist.

Konkret sind die Anschlussmittel hier als integral mit dem Montagequerträger ausgebildete Anschlussflansche ausgebildet, über die der Montagequerträger direkt mit den A-Säulen des Fahrzeugaufbaus verschraubt wird. Nach diesem Verschrauben des Montagequerträgers mit dem Fahrzeugaufbau wird die Instrumententafel über nicht näher dargestellte und erläuterte Halteeinrichtungen auf dem Montagequerträger befestigt.

Aus der gattungsgemäßen US 5387023 ist zwar ein Beispiel für diese Halteeinrichtung bekannt, dass aber den folgenden Punkt auch nicht anspricht.

Nachteilig bei diesem Aufbau ist, dass es sowohl bei der Montage des Montagequerträgers am Fahrzeugaufbau als auch bei der Montage der Instrumententafel am Montagequerträger durch herstellungsbedingte Ungenauigkeiten zu Lageabweichungen hinsichtlich der einander zugeordneten Anbindungsstellen, z. B. Schraublöchern, und damit zu Verspannungen bei der Bauteilverbindung kommen kann, wobei durch die Anbindung an in Fahrzeugquerrichtung gegenüberliegenden Fahrzeugseiten regelmäßig die größten Lageabweichungen in Fahrzeugquerrichtung auftreten. Diese Ungenauigkeiten summieren sich von Bauteil zu Bauteil, so dass es unter Umständen zu erheblichen Lageabweichungen hinsichtlich der einander zugeordneten Anbindungsstellen zweier miteinander zu verbindender Bauteile kommen kann. Dies ist insbesondere bei der Montage der Instrumententafel problematisch, da es hierdurch zu unerwünschten oder unregelmäßigen Spaltabständen zwischen den an die Instrumententafel angrenzenden Bauteilen kommt, was zum einen den optischen Gesamteindruck beeinträchtigt und zum anderen auch einen qualitativ minderwertigen Eindruck vermittelt. Maßnahmen zur Vermeidung derartiger Lageungenauigkeiten sind hier nicht vorgesehen.

Derartige Ungenauigkeiten können zusätzlich noch dadurch verstärkt werden, wenn die Halteeinrichtungen in allgemein vorbekannter Weise mit dem Montagequerträger verschweißt werden und ein Schweißverzug auftritt.

Ferner ist es allgemein bekannt, herstellungsbedingte Lageungenauigkeiten durch Toleranzausgleichsmittel auszugleichen.

Aufgabe der Erfindung ist es, eine Instrumententafelanordnung an einem Fahrzeug, insbesondere an einem Kraftfahrzeug, zu schaffen, die schnell, einfach und spannungsfrei zu montieren ist. Eine weitere Aufgabe der Erfindung ist es, ein Verfahren zur Montage einer derartigen Instrumententafelanordnung zur Verfügung zu stellen.

Diese Aufgabe wird bezüglich der Instrumententafelanordnung mit den Merkmalen des Anspruchs 1 gelöst.

Gemäß Anspruch 1 ist an der Instrumententafel je eine Halteeinrichtung an in Instrumententafellängsrichtung gesehen gegenüberliegenden Endbereichen angeordnet ist. Am Montagequerträger ist vorzugsweise endseitig je ein Anschlussbereich angeordnet, der je einer der Halteeinrichtungen zugeordnet ist. Die Anschlussmittel sind als vorzugsweise in Fahrzeuglängs- und/oder Fahrzeughochachsenrichtung ausrichtbare separate Anschlussböcke ausgebildet, die je einer der Halteeinrichtungen zugeordnet sind. Der Montagequerträger ist über die Halteeinrichtungen mit der Instrumententafel unter Toleranzausgleich durch an den Halteeinrichtungen und am Anschlussbereich des Montagequerträgers ausgebildete erste Toleranzausgleichsmittel spannungsfrei zu einer Vormontageeinheit verbindbar. Diese spannungsfrei vormontierte Vormontageeinheit ist über die Halteeinrichtungen unter Toleranzausgleich, vorzugsweise wenigstens in Fahrzeugquerrichtung, durch an den Halteeinrichtungen und an den Anschlussböcken ausgebildete zweite Toleranzausgleichsmittel spannungsfrei an den Anschlussböcken und damit am Fahrzeugaufbau festlegbar.

Vorteilhaft wird hierdurch erreicht, dass der Montagequerträger unabhängig von der Endmontage im Rahmen der Vormontage spannungsfrei über die Halteeinrichtungen mit der Instrumententafel verbunden werden kann. Diese Verlagerung der Anbindung des Montagequerträgers an der Instrumententafel in die Vormontage führt zu einer erwünschten Verringerung der Montagezeiten in der Endmontage, da hier dann nicht mehr sowohl der Montagequerträger als auch die Instrumententafel separat endmontiert werden müssen, sondern nur noch ein Bauteil, nämlich die Vormontageeinheit. Vorteilhaft wird damit auch erreicht, dass in der Endmontage über die Halteeinrichtungen nur noch ein Toleranzausgleich mittels der zweiten Toleranzausgleichsmittel in Verbindung mit den Anschlussböcken durchzuführen ist. Der Montagequerträger ist hier somit nicht mehr direkt, sondern indirekt über die Halteeinrichtungen am Fahrzeugaufbau festgelegt.

Vorteilhaft wird mit einem derartigen Aufbau ferner erreicht, dass hier durch die separaten Anschlussböcke bereits eine erste Ausrichtung möglich ist, und zwar bevorzugt in Fahrzeuglängsrichtung und in Fahrzeughochachsenrichtung, was regelmäßig einfach zu erreichen ist, so dass nur noch ein Toleranzausgleich in Fahrzeugquerrichtung als ohnehin am meisten kritischer Ausgleichsrichtung vorzunehmen ist. Ein derartiger Toleranzausgleich wird erfindungsgemäß durch die mit der Instrumententafel verbundenen Halteeinrichtungen als zentralen Ausgleichselementen durchgeführt werden. Denn an diesen Halteeinrichtungen sind Toleranzausgleichsmittel sowohl für den Toleranzausgleich mit dem Montagequerträger als auch mit den Anschlussböcken ausgebildet, so dass für einen Toleranzausgleich zur spannungsfreien Montage der Instrumententafelanordnung insgesamt die Bauteilvielfalt durch diese optimierte Funktionsintegration an den Halteeinrichtungen auf das notwendige Minimum reduziert ist. Dadurch ergibt sich auch ein kompakter Aufbau, der insbesondere für beengte Einbausituationen geeignet ist.

Grundsätzlich gibt es verschiedene Möglichkeiten einen Toleranzausgleich zwischen den einzelnen Bauteilen vorzusehen. In einer besonders bevorzugten Ausführungsform ist für den Toleranzausgleich sowohl zwischen dem Montagequerträger und den Halteeinrichtungen und/oder den Anschlussböcken als auch zwischen den Anschlussböcken und den Halteeinrichtungen jeweils wenigstens ein Langloch vorgesehen, durch das ein relativ dazu verschiebbarer Stiftbolzen, vorzugsweise ein Schraubbolzen, durchsteckbar ist. Anstelle eines Langlochs kann alternativ auch eine Bohrung mit einem entsprechenden Übermaß gegenüber dem Stiftbolzendurchmesser vorgesehen sein. Alternativ ist anstelle eines Schraubbolzens, auf den eine Mutter zur Fixierung der Bauteile aufschraubbar ist, auch eine Festlegung dahingehend möglich, dass durch den Stiftbolzen ein Sicherungssplint geschoben wird. Derartige Maßnahmen für den Toleranzausgleich sind wenig aufwendig und damit preiswert herstellbar und erlauben eine einfache Montage bei hoher Funktionssicherheit.

Des weiteren wird mit einem derartigen Aufbau vorteilhaft erreicht, dass seitlich Abdeckkappen durch die spannungsfreie Montage der Instrumententafelanordnung ebenfalls spannungsfrei aufsetzbar sind.

Insgesamt ist mit einem derartigen Aufbau somit eine spannungsfreie Montage der Instrumententafelanordnung in einem Fahrzeug unter einfacher Ausrichtung bezüglich angrenzender Bauteile möglich, so dass unerwünschte Spalten oder unerwünschte unregelmäßige Spaltabstände zwischen der Instrumententafel und den angrenzenden Bauteilen, wie z. B. einer Türinnenverkleidung, vermieden werden können. Dadurch wird der optische Gesamteindruck nicht beeinträchtigt und zum anderen auch kein qualitativ minderwertiger Eindruck vermittelt.

In einer konkreten, bevorzugten Ausführungsform ist an den Halteeinrichtungen wenigstens ein bezogen auf den montierten Zustand vorzugsweise in Fahrzeugquerrichtung ausgerichtetes Vormontage-Langloch als Toleranzausgleichsmittel angeordnet, über das die Instrumententafel unter Toleranzausgleich mit einem Stiftbolzen als Toleranzausgleichsmittel des Anschlussbereichs des Montagequerträgers spannungsfrei verbindbar, vorzugsweise verschraubbar, ist. Ein derartiger Stiftbolzen kann als Schraubbolzen integral mit dem Anschlussbereich ausgebildet sein oder aber auch als separates Bauteil mit Schraubenkopf durch eine entsprechende Bohrung im Anschlussbereich formschlüssig durchgesteckt sein, wobei die Bohrung dann dem Vormontage-Langloch zugeordnet ist. Damit ist der Montagequerträger auf einfache und funktionssichere Weise spannungsfrei mit der Instrumententafel verbindbar.

In einer hierzu bevorzugten Ausführungsform ist an den Halteeinrichtungen weiter zusätzlich wenigstens ein bezogen auf den montierten Zustand vorzugsweise in Fahrzeugquerrichtung ausgerichtetes Endmontage-Langloch als Toleranzausgleichsmittel angeordnet. Weiter ist an den Anschlussböcken jeweils wenigstens ein Stiftbolzen angeordnet, der vorzugsweise in Fahrzeuglängsrichtung ausgerichtet ist. Dieser wenigstens eine Stiftbolzen ist dem wenigstens einen Endmontage-Langloch so zugeordnet, dass der wenigstens eine Stiftbolzen im endmontierten Zustand der Instrumententafelanordnung das Endmontage-Langloch durchdringt, wobei durch das Übermaß des Langlochs gegenüber dem Stiftbolzendurchmesser ein Toleranzausgleich vorzugsweise wenigstens in Fahrzeugquerrichtung für eine spannungsfreie Endmontage der Vormontageeinheit am Fahrzeugaufbau durchführbar ist. Mit einem derartigen Aufbau ist eine einfache und schnelle Montage möglich, wobei die Stiftbolzen zur Verschraubung einfach zugänglich sind. Damit ist insbesondere auch eine schnelle Ausrichtung der Anordnung möglich, so dass die Instrumententafelanordnung ohne Spalte und/oder ohne unregelmäßige Spaltabstände montierbar ist. Insgesamt ergeben sich hier somit vorteilhaft kurze Endmontagezeiten.

Diese Zuordnung der Halteeinrichtungen zu den Anschlussböcken ist generell ausreichend für eine gute und sichere Anbindung der gesamten Instrumententafelanordnung an einem Fahrzeugaufbau. Des weiteren kann aber auch vorgesehen sein, dass dem wenigstens einen ersten Endmontage-Langloch jeweils ein in etwa entsprechend ausgerichtetes und ausgebildetes zweites Endmontage-Langloch als Toleranzausgleichsmittel am Anschlussbereich des Montagequerträgers zugeordnet ist. Die Zuordnung ist dabei so gewählt, dass im vormontierten Zustand der Vormontageeinheit das erste Endmontage-Langloch der Halteeinrichtungen benachbart, vorzugsweise anliegend, und in etwa fluchtend zu dem zweiten Endmontage-Langloch der Montagequerträger-Anschlussbereiche angeordnet ist. Der wenigstens eine Stiftbolzen durchdringt im endmontierten Zustand der Instrumententafelanordnung das erste und zweite Endmontage-Langloch, wobei durch das Übermaß der Langlöcher gegenüber dem Stiftbolzendurchmesser ein Toleranzausgleich vorzugsweise wenigstens in Fahrzeugquerrichtung für eine spannungsfreie Endmontage der Vormontageeinheit am Fahrzeugaufbau durchführbar ist. Auch mit einem derartigen Aufbau ist eine einfache und schnelle Montage möglich, wobei die Stiftbolzen zur Verschraubung einfach zugänglich sind. Weiter ist auch hier eine schnelle Ausrichtung der Anordnung möglich, so dass die Instrumententafelanordnung ohne Spalte und/oder ohne unregelmäßige Spaltabstände montierbar ist. Insgesamt ergeben sich hier somit auch vorteilhaft kurze Endmontagezeiten. Ein derartiger Aufbau mit zweiten Endmontage-Langlöcher ist insbesondere dann von Vorteil, wenn die Anschlussbereiche des Montagequerträgers in einer flächigen Anlageverbindung an den Halteeinrichtungen anliegen sollen.

In einer konkreten Ausführungsform sind die Anschlussböcke bevorzugt aus einer Anschlussplatte mit einem an einer der Oberseiten im Randbereich U-förmig umlaufenden Anschlussbock-Randsteg ausgebildet, wobei an der U-Basis des Randstegs Toleranzausgleichsmittel angeordnet sind, z. B. Stiftbolzen. Die U-Basis ist der jeweiligen Halteeinrichtung sowie ggf. dem jeweiligen Anschlussbereich des Montagequerträgers zugeordnet. Weiter bevorzugt ist jeder Anschlussbock an der anderen Oberseite mit einem Verstärkungselement, vorzugsweise einem Verstärkungsblech, versteift, das einen Bestandteil des Fahrzeugaufbaus, zum Beispiel der A-Säule des Fahrzeugs, bildet. Insgesamt wird mit einem derartigen Aufbau des Anschlussbocks eine einfache und schnelle Anbindungsmöglichkeit der Vormontageeinheit am Fahrzeugaufbau ermöglicht. Des weiteren ist ein derartiger Anschlussbock einfach herzustellen und somit preiswert im Aufbau. Ebenso kann dieser Anschlussbock zumindest mit einem Teilbereich einfach in den Fahrzeugaufbau, zum Beispiel die erwähnten A-Säulen, integriert werden.

In einer besonders vorteilhaften Ausführungsform ist jeder Anschlussbereich des Montagequerträgers durch eine vorzugsweise endseitig daran angeordnete und dem jeweiligen Anschlussbock zugeordnete Anschlussplatte mit einem darauf im Randbereich U-förmig umlaufenden Montagequerträger-Randsteg ausgebildet. Auch hier umfasst die U-Basis Toleranzausgleichsmittel, die der jeweiligen Halteeinrichtung sowie ggf. dem jeweiligen Anschlussbock zugeordnet sind. Für eine einfache und funktionssichere Anordnung der Montagequerträger-Anschlussbereiche an den Anschlussböcken kann dann der Montagequerträger-Randsteg im endmontierten Zustand den Anschlussbock-Randsteg in einer Anlageverbindung umgreifen. Alternativ kann aber auch umgekehrt der Anschlussbock-Randsteg den Montagequerträger-Randsteg in einer Anlageverbindung umgreifen. Durch eine derartige Zuordnung ist sichergestellt, dass ein an den Anschlussböcken ausgebildeter Stiftbolzen die zugeordneten Endmontage-Langlöcher der Halteeinrichtungen und der Anschlussbereiche auf sichere Weise für einen Toleranzausgleich durchdringen kann.

In einer bevorzugten Ausführungsform ist der Montagequerträger durch ein zylinderförmiges Rohrstück gebildet, das vorzugsweise zwischen den beiden Anschlussbereichen verläuft. Dieses Rohrstück kann auch aus mehreren Teilen aufgebaut sein und ist zweckmäßig aus Leichtmetall hergestellt.

In einer weiteren bevorzugen Ausführungsform ist jede Halteeinrichtung durch einen Halterahmen, vorzugsweise aus Blech, gebildet, der mit einem Rahmenteil mit der Instrumententafel, vorzugsweise mittels einer Schraub- und/oder Clip- und/oder Nietverbindung, verbindbar ist. Ein weiteres Rahmenteil ist vorzugsweise leistenförmig ausgebildet und umfasst die Toleranzausgleichsmittel. Dieses Rahmenteil ist einem Anschlussbereich des Montagequerträgers sowie dem jeweiligen Anschlussbock zugeordnet. Ein derartiger Aufbau der Halteeinrichtung ist gewichtsgünstig herzustellen und ermöglicht zudem eine gute und sichere Montage.

Bezüglich des Verfahrens wird die Aufgabe gelöst mit den Merkmalen des Anspruchs 11.

Gemäß Anspruch 11 wird in einem Vormontageschritt der Montagequerträger über an der Instrumententafel jeweils vorzugsweise endseitig angeordnete Halteeinrichtungen mit der Instrumententafel unter Toleranzausgleich durch an den Halteeinrichtungen und an Anschlussbereichen des Montagequerträgers ausgebildete erste Toleranzausgleichsmittel spannungsfrei zu einer Vormontageeinheit verbunden. In einem ersten Endmontageschritt werden die als separate Bauteile ausgebildeten Anschlussböcke am Fahrzeugaufbau, vorzugsweise in Fahrzeuglängsrichtung und in Fahrzeughochachsenrichtung ausgerichtet, angebracht, während in einem zweiten Endmontageschritt die im Vormontageschritt spannungsfrei vormontierte Vormontageeinheit über die Halteeinrichtungen unter Toleranzausgleich durch an den Halteeinrichtungen und an den Anschlussböcken ausgebildete zweite Toleranzausgleichsmittel spannungsfrei an den Anschlussböcken und damit am Fahrzeugaufbau festgelegt wird. Ein Toleranzausgleich erfolgt hier vorzugsweise wenigstens in Fahrzeugquerrichtung.

Mit einem derartigen Verfahren ergeben sich die eingangs in Verbindung mit dem Anspruch 1 geschilderten Vorteile.

Die Erfindung wird nachfolgend anhand einer Zeichnung näher erläutert.

Es zeigen:
- Fig. 1: eine schematische perspektivische Teilansicht einer Instrumententafel mit daran angeordnetem Halterahmen,
- Fig. 2: eine schematische Seitenansicht der Fig. 1,
- Fig. 3: eine schematische perspektivische Teilansicht eines Montagequerträgers mit einem Anschlussbereich,
- Fig. 4: eine schematische perspektivische Darstellung eines Anschlussblocks,
- Fig. 5: eine schematische, perspektivische Darstellung einer mit einem Anschlussbock verbundenen Vormontageeinheit, bei der aus Übersichtlichkeitsgründen die Instrumententafel nicht gezeigt ist, und
- Fig. 6: eine schematische Seitenansicht einer endmontierten Instrumententafelanordnung.

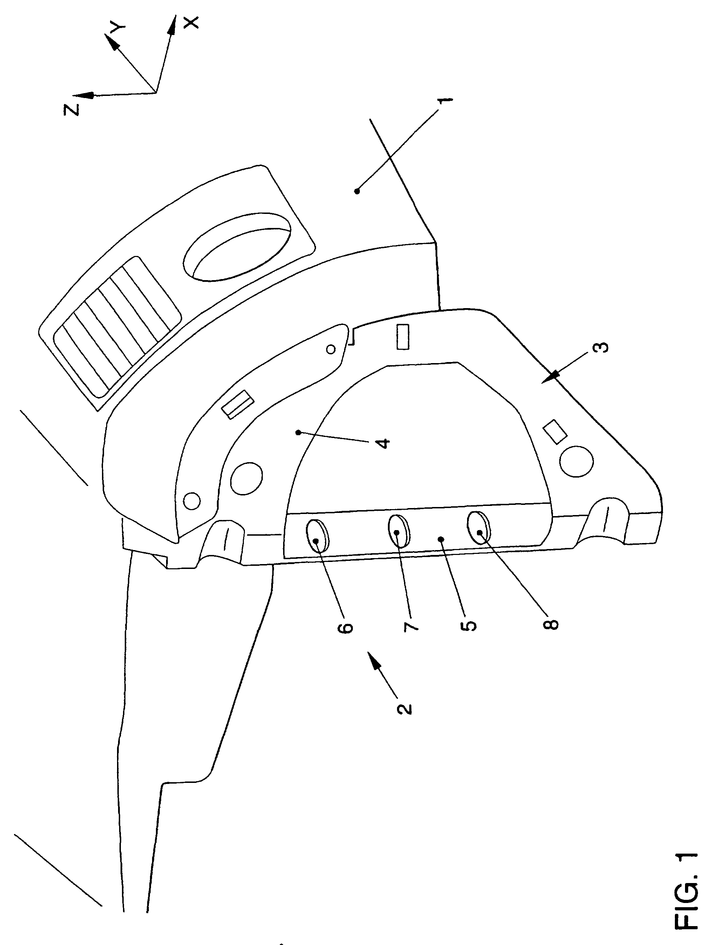

In Fig. 1 ist schematisch und perspektivisch eine Instrumententafel 1 einer Instrumententafelanordnung 2 dargestellt. An der Instrumententafel 1 ist an in Instrumententafellängsrichtung gesehen gegenüberliegenden Endbereichen jeweils ein Halterahmen 3 als Halteeinrichtung angeordnet, von denen hier in der Darstellung der Fig. 1 beispielhaft lediglich einer schematisch dargestellt ist.

Dieser Halterahmen 3 ist aus Blech gebildet und über ein erstes Rahmenteil 4 mit der Instrumententafel 1 verbunden. Die Verbindung erfolgt hier vorzugsweise über eine Schraubverbindung. Alternativ ist auch eine Verbindung durch Ultraschallnieten möglich.

Ein zweites Rahmenteil 5 ist hier leistenförmig ausgebildet und in etwa in Z-Richtung als Fahrzeughochachsenrichtung ausgerichtet.

Am zweiten Rahmenteil 5 sind hier beispielhaft zwei erste in Y-Richtung als Fahrzeugquerrichtung ausgerichtete Endmontage-Langlöcher 6, 8 und ein ebenfalls in Y-Richtung als Fahrzeugquerrichtung ausgerichtetes Vormontage-Langloch 7 beabstandet voneinander ausgebildet.

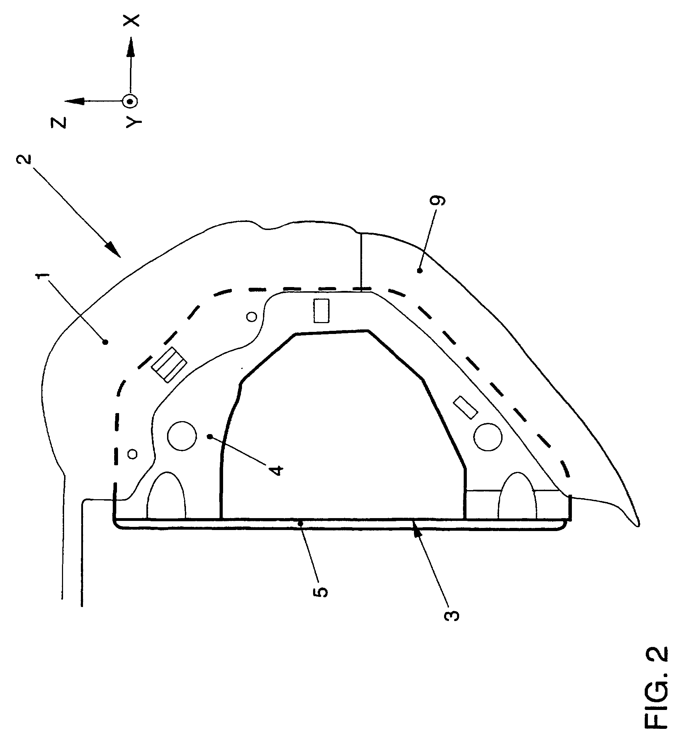

In der Fig. 2 ist eine schematische Seitenansicht der Anordnung gemäß Fig. 1 dargestellt, wobei hier die Instrumententafel 1 um ein zusätzliches Bauteil 9 ergänzt ist. Strichliert ist hier der Verlauf des Halterahmens 3 im Überlappungs- und Überdeckungsbereich des seitlichen Instrumententafelbereichs eingezeichnet. Dieses untere Bauteil 9 der Instrumententafel 1 ist mit dem Halterahmen 3 ebenfalls über Schraubverbindungen oder aber auch alternativ über Niet- und/oder Clipverbindungen verbindbar.

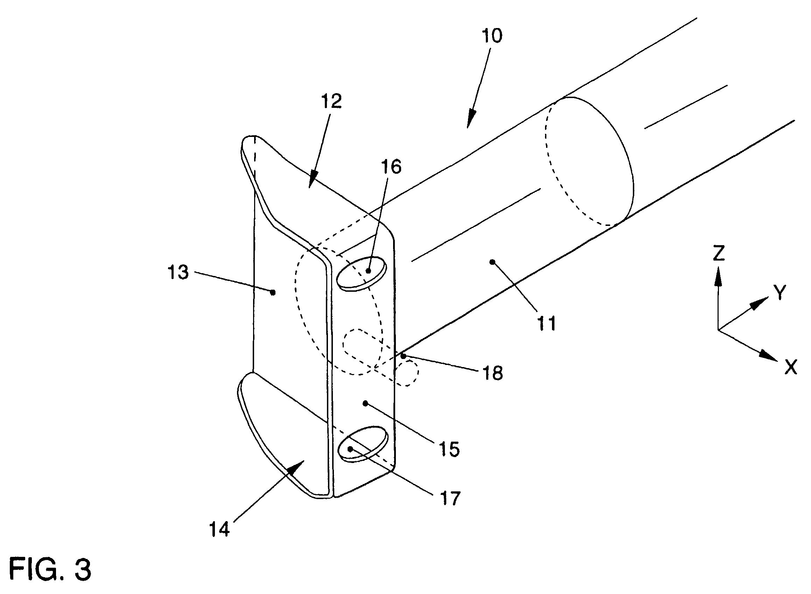

In der Fig. 3 ist schematisch eine Teilansicht eines Montagequerträgers 10 perspektivisch dargestellt. Dieser Montagequerträger 10 ist im wesentlichen durch ein zylinderförmiges Rohrstück 11 gebildet, an dessen Endbereichen jeweils ein Anschlussbereich 12 ausgebildet ist, von denen hier beispielhaft nur einer dargestellt ist.

Dieser Anschlussbereich 12 wird durch eine endseitig am Montagequerträger 10 angeordnete Anschlussplatte 13 gebildet, an deren nach außen gerichteter Oberseite ein im Randbereich, hier beispielhaft am Randkantenbereich U-förmig umlaufender Montagequerträger-Randsteg 14 ausgebildet ist. An der U-Basis 15 des Montagequerträger-Randstegs 14 sind an gegenüberliegenden Enden jeweils zwei in Y-Richtung als Fahrzeugquerrichtung ausgerichtete zweite Endmontage-Langlöcher 16, 17 ausgebildet, die den Endmontage-Langlöchem 6, 8 am Halterahmen 3 der Instrumententafel 1 entsprechend zugeordnet sind.

Ferner ist in einem mittleren Bereich der U-Basis 15 zwischen den beiden zweiten Endmontage-Langlöchern 16, 17, wie dies hier lediglich strichliert eingezeichnet ist, ein in X-Richtung als Fahrzeuglängsrichtung ausgerichteter Schraubbolzen 18 vorgesehen, der dem Vormontage-Langloch 7 des Halterahmens 3 zugeordnet ist. Dieser Schraubbolzen 18 kann entweder integral an der U-Basis 15 angeordnet sein oder aber auch als separates Bauteil durch eine entsprechende Bohrung in der U-Basis 15 formschlüssig durchgeführt sein, wobei der Schraubbolzen 18 in einem solchen Fall einen Bolzenkopf aufweist, über den er sich an der U-Basis 15 abstützt.

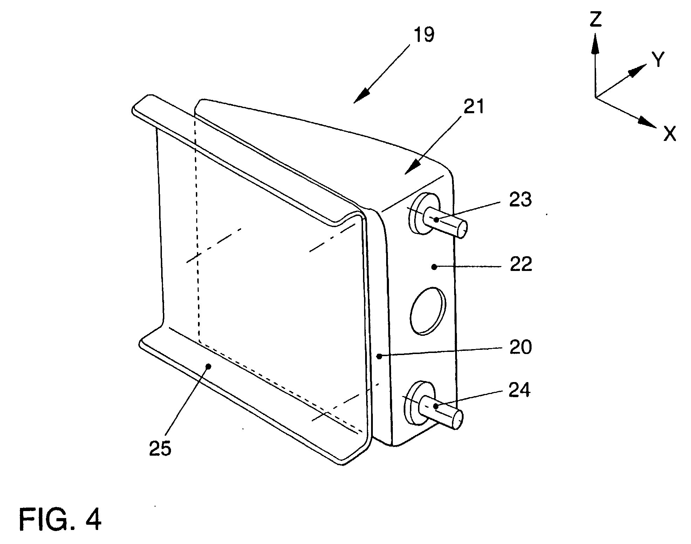

In der Fig. 4 ist schematisch und perspektivisch ein Anschlussbock 19 dargestellt, der aus einer Anschlussplatte 20 mit einem an einer Oberseite im Randbereich, hier beispielhaft am Randkantenbereich U-förmig umlaufenden Anschlussbock-Randsteg 21 ausgebildet ist. An einer U-Basis 22 des Anschlussbock-Randstegs 21 sind an gegenüberliegenden Enden jeweils Schraubbolzen 23, 24 angeordnet, die sich in X-Richtung als Fahrzeuglängsrichtung erstrecken. Diese Schraubbolzen 23, 24 können entweder integral mit der U-Basis 22 ausgebildet sein oder aber auch durch eine entsprechend in der U-Basis 22 ausgebildete Bohrung durchgesteckt sein, wobei dann auch hier wieder die Schraubbolzen 23, 24 Bolzenköpfe zur Abstützung an der U-Basis 22 aufweisen. Die Schraubbolzen 23, 24 sind jeweils den zweiten Endmontage-Langlöchern 16, 17 an den Anschlussbereichen 12 des Montagequerträgers 10 sowie den ersten Endmontage-Langlöchem 6, 8 des an der Instrumententafel 1 gehalterten Halterahmens 3 zugeordnet.

Wie dies aus der Fig. 4 weiter ersichtlich ist, ist die Anschlussplatte 20 des Anschlussbocks 19 ferner mit einem Verstärkungsblech 25 versteift, vorzugsweise verschraubt. Dieses Verstärkungsblech 25 bildet im montierten Zustand vorzugsweise einen Bestandteil des Fahrzeugaufbaus, vorzugsweise der A-Säulen, was hier allerdings nicht dargestellt ist.

Das Verfahren zur Montage der Instrumententafelanordnung 2 wird nachfolgend anhand der Fig. 1 bis 6 näher erläutert:

In einem Vormontageschritt wird die Instrumententafel 1 mit dem Montagequerträger 10 über die Halterahmen 3 unter Toleranzausgleich spannungsfrei zu einer Vormontageeinheit 26 verbunden. Dazu wird der Schraubbolzen 18 des Montagequerträger-Randstegs 14 durch das Vormontage-Langloch 7 des Halterahmens 3 gesteckt, wobei durch das Übermaß des Vormontage-Langlochs 7 gegenüber dem Bolzendurchmesser des Schraubbolzens 18 ein Toleranzausgleich und damit eine Ausrichtung des Montagequerträgers 10 gegenüber der Instrumententafel 1 wenigstens in die Y-Richtung als Fahrzeugquerrichtung durchgeführt wird. In der ausgerichteten Position des Montagequerträgers 10 zur Instrumententafel 1 kann dann auf den Schraubbolzen 18 eine Mutter zur Fixierung der Vormontageeinheit 26 aufgeschraubt werden. Dadurch ist der Montagequerträger 10 spannungsfrei mit der Instrumententafel 1 zur Vormontageeinheit 26 vormontiert. In diesem vormontierten Zustand liegt die U-Basis 15 des Montagequerträger-Randstegs 14 vorzugsweise so am Rahmenteil 5 an, dass die ersten und zweiten Endmontage-Langlöcher 6, 16 und 8, 17 in etwa fluchten.

Danach werden in einem ersten Endmontageschritt die Anschlussböcke 19 an in Fahrzeugquerrichtung gegenüberliegenden A-Säulenbereichen angebracht, wobei diese Anschlussböcke 19 dabei in X-Richtung als Fahrzeuglängsrichtung und in Z-Richtung als Fahrzeughochachsenrichtung ausgerichtet werden.

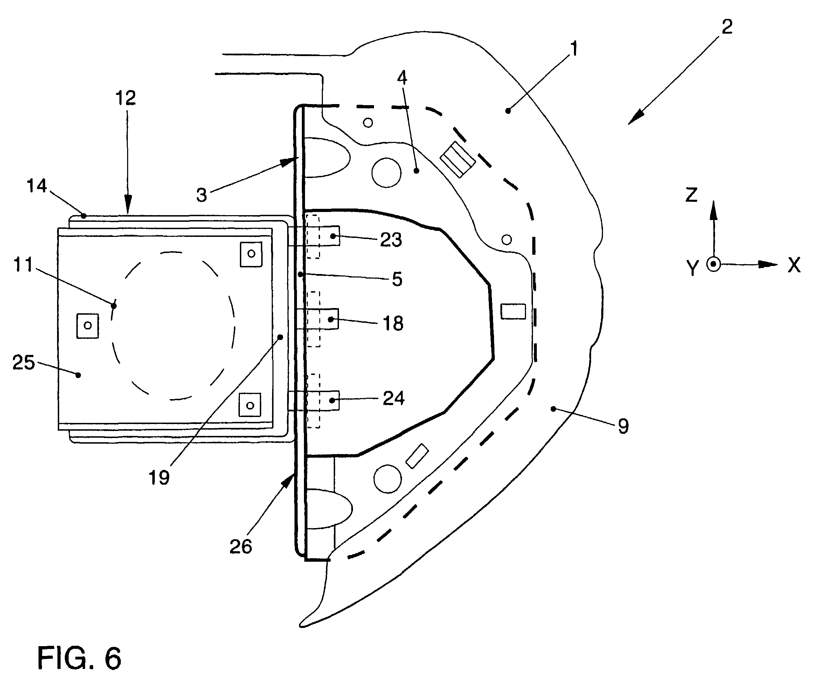

Anschließend wird in einem zweiten Endmontageschritt die im Vormontageschritt spannungsfrei vormontierte Vormontageeinheit 26 über die Halterahmen 3 an den Anschlussböcken 19 festgelegt. Dazu werden die Schraubbolzen 23, 24 der Anschlussböcke 19 sowohl durch die ersten Endmontage-Langlöcher 6, 8 des Halterahmens 3 als auch durch die den ersten Endmontage-Langlöchem 6, 8 zugeordneten zweiten Endmontage-Langlöcher 16, 17 gesteckt. Durch das Übermaß der ersten und zweiten Endmontage-Langlöcher 6, 8, 16, 17 gegenüber dem Bolzendurchmesser der Schraubbolzen 23, 24 ist ein Toleranzausgleich und damit eine spannungsfreie Ausrichtung der Vormontageeinheit 26 wenigstens in Y-Richtung als Fahrzeugquerrichtung möglich. Sobald die Vormontageeinheit 26 zum Beispiel hinsichtlich einer Türinnenverkleidung mit gleichen Spaltabständen ausgerichtet ist, können auf die Schraubbolzen 23, 24 zur spannungsfreien Festlegung der Instrumententafelanordnung 2 am Fahrzeug Muttern aufgeschraubt und festgezogen werden, wie dies in der Fig. 6 schematisch dargestellt ist.

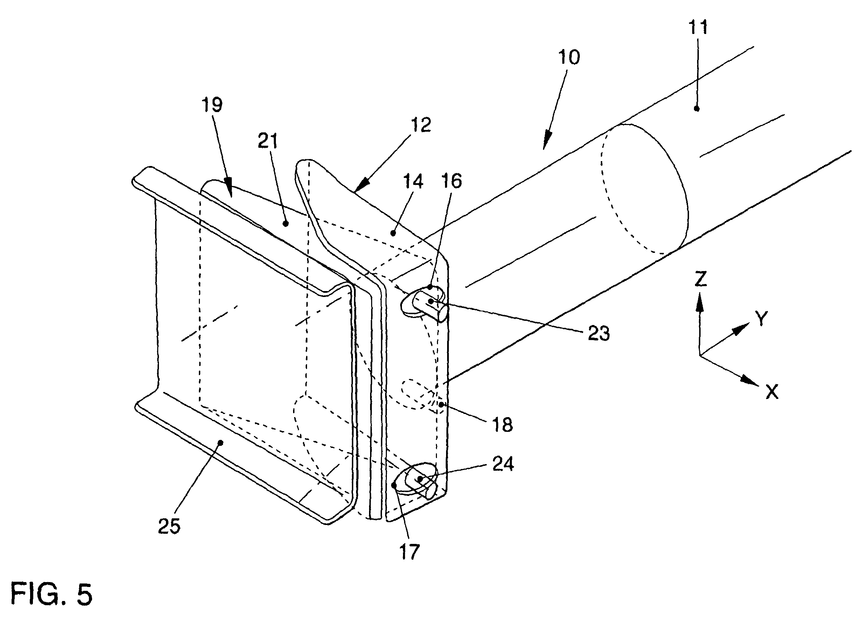

In der Fig. 5 ist die Verbindung zwischen dem Anschlussbereich 12 des Montagequerträgers 10 und den Anschlussböcken 19 schematisch dargestellt, wobei aus Übersichtlichkeitsgründen hier die Instrumententafel 1 sowie die Halteeinrichtung 3 nicht gezeigt ist. Insbesondere ist aus dieser Darstellung ersichtlich, dass im fertig montierten Zustand der Montagequerträger-Randsteg 14 den Anschlussblock-Randsteg 21 in einer Anlageverbindung umgreift. Wie dies insbesondere aus Fig. 4 ersichtlich ist, kann an der U-Basis 22 des Anschlussbock-Randstegs 21 in einem mittleren Bereich auch eine Bohrung vorgesehen sein, in der z. B. ein Schraubenkopf eines zur Vormontage des Montagequerträgers 10 an den Halteeinrichtungen benötigter Schraubenkopf zum Liegen kommt, damit dieser die Anlage der beiden Randstege 14, 21 nicht behindert. Außerdem ist hier vorteilhaft dann ein Zugang zu diesem Schraubbolzen möglich, um ggf. etwaige Nachjustierungen bezüglich der Vormontageeinheit 26 durchführen zu können.

### BEZUGSZEICHENLISTE

- 1: Instrumententafel
- 2: Instrumententafelanordnung
- 3: Halterahmen
- 4: Rahmenteil, erstes
- 5: Rahmenteil, zweites
- 6: Langloch-Endmontage, erstes
- 7: Langloch-Vormontage
- 8: Langloch-Endmontage, erstes
- 9: Bauteil
- 10: Montagequerträger
- 11: Rohrstück
- 12: Anschlussbereich
- 13: Anschlussplatte
- 14: Montagequerträger-Randsteg
- 15: U-Basis
- 16: zweites Endmontage-Langloch
- 17: zweites Endmontage-Langloch
- 18: Schraubbolzen
- 19: Anschlussbock
- 20: Anschlussplatte
- 21: Anschlussbock-Randsteg
- 22: U-Basis
- 23: Schraubenbolzen
- 24: Schraubenbolzen
- 25: Verstärkungsblech
- 26: Vormontageeinheit

## Patentansprüche

1. Instrumententafelanordnung an einem Fahrzeug, insbesondere an einem Kraftfahrzeug, mit einem im montierten Zustand in etwa in Fahrzeugquerrichtung verlaufenden Montagequerträger, an dem eine Instrumententafel mittels wenigstens einer Halteeinrichtung gehaltert ist, wobei die Instrumententafelanordnung in Fahrzeugquerrichtung gesehen an gegenüberliegenden Seiten über je ein Anschlussmittel am Fahrzeugaufbau festlegbar ist,
an der Instrumententafel (1) je eine Halteeinrichtung (3) an in Instrumententafellängsrichtung gesehen gegenüberliegenden Endbereichen angeordnet ist,
und am Montagequerträger (10) vorzugsweise endseitig je ein Anschlussbereich (12) angeordnet ist, der je einer der Halteeinrichtungen (3) zugeordnet ist, **dadurch gekennzeichnet,**
**dass** die Anschlussmittel als vorzugsweise in Fahrzeuglängs- und/oder Fahrzeughochachsenrichtung ausrichtbare separate Anschlussböcke (19) ausgebildet sind, die je einer der Halteeinrichtungen (3) zugeordnet sind,
**dass** der Montagequerträger (10) über die Halteeinrichtungen (3) mit der Instrumententafel (1) unter Toleranzausgleich durch an den Halteeinrichtungen (3) und am Anschlussbereich (12) des Montagequerträgers (10) ausgebildete erste Toleranzausgleichsmittel (7, 18) spannungsfrei zu einer Vormontageeinheit (26) verbindbar ist, und
**dass** die spannungsfrei vormontierte Vormontageeinheit (26) über die Halteeinrichtungen (3) unter Toleranzausgleich, vorzugsweise wenigstens in Fahrzeugquerrichtung, durch an den Halteeinrichtungen (3) und an den Anschlussböcken (19) ausgebildete zweite Toleranzausgleichsmittel (6, 8, 23, 24) spannungsfrei an den Anschlussböcken (19) und damit am Fahrzeugaufbau festlegbar ist.

2. Instrumentenanordnung nach Anspruch 1, **dadurch gekennzeichnet, dass**
an den Halteeinrichtungen (3) wenigstens ein bezogen auf den montierten Zustand vorzugsweise in Fahrzeugquerrichtung ausgerichtetes Vormontage-Langloch (7) als Toleranzausgleichsmittel angeordnet ist, über das die Instrumententafel (1) unter Toleranzausgleich mit einem Stiftbolzen (18), vorzugsweise einem Schraubbolzen, als Toleranzausgleichsmittel des Anschlussbereichs (12) des Montagequerträgers (10) spannungsfrei verbindbar, vorzugsweise verschraubbar, ist.

3. Instrumententafelanordnung nach Anspruch 1 oder 2, **dadurch gekennzeichnet,**
**dass** an den Halteeinrichtungen (3) wenigstens ein bezogen auf den montierten Zustand vorzugsweise in Fahrzeugquerrichtung ausgerichtetes Endmontage-Langloch (6, 8) als Toleranzausgleichsmittel angeordnet ist,
**dass** an den Anschlussböcken (19) jeweils wenigstens ein Stiftbolzen (23, 24) als Toleranzausgleichsmittel angeordnet ist, der vorzugsweise in Fahrzeuglängsrichtung ausgerichtet und dem wenigstens einen Endmontage-Langloch (6, 8) zugeordnet ist dergestalt,
**dass** der wenigstens eine Stiftbolzen (23, 24) im endmontierten Zustand der Instrumententafelanordnung (2) das wenigstens eine Endmontage-Langloch (6, 8) durchdringt, wobei durch das Übermaß des Langlochs (6, 8, 16, 17) gegenüber dem Stiftbolzendurchmesser ein Toleranzausgleich vorzugsweise wenigstens in Fahrzeugquerrichtung für eine spannungsfreie Endmontage der Vormontageeinheit (26) am Fahrzeugaufbau durchführbar ist.

4. Instrumententafelanordnung nach Anspruch 3, **dadurch gekennzeichnet,**
**dass** dem wenigstens einen ersten Endmontage-Langloch (6, 8) jeweils ein in etwa entsprechend ausgerichtetes und ausgebildetes zweites Endmontage-Langloch (16, 17) als Toleranzausgleichsmittel am Anschlussbereich (12) des Montagequerträgers (10) zugeordnet ist, wobei im vormontierten Zustand der Vormontageeinheit (26) das erste Endmontage-Langloch (6, 8) der Halteeinrichtungen (3) benachbart, vorzugsweise anliegend, und in etwa fluchtend zu dem zweiten Endmontage-Langloch (16, 17) der Montagequerträger-Anschlussbereiche (12) angeordnet ist, und
**dass** der wenigstens eine Stiftbolzen (23, 24) im endmontierten Zustand der Instrumententafelanordnung (2) das erste und zweite Endmontage-Langloch (6, 8, 16, 17) durchdringt, wobei durch das Übermaß der Langlöcher (6, 8, 16, 17) gegenüber dem Stiftbolzendurchmesser ein Toleranzausgleich vorzugsweise wenigstens in Fahrzeugquerrichtung für eine spannungsfreie Endmontage der Vormontageeinheit (26) am Fahrzeugaufbau durchführbar ist.

5. Instrumententafelanordnung nach einem der Ansprüche 1 bis 4, **dadurch gekennzeichnet,**
**dass** die Anschlussböcke (19) aus einer Anschlussplatte (20) mit einem an einer der Oberseiten im Randbereich U-förmig umlaufenden Anschlussbock-Randsteg (21) ausgebildet sind, und
**dass** die U-Basis (22) des Anschlussbock-Randstegs (21) Toleranzausgleichsmittel (23, 24) umfasst, die der jeweiligen Halteeinrichtung (3) zugeordnet ist.

6. Instrumententafelanordnung nach Anspruch 5, **dadurch gekennzeichnet, dass** jeder Anschlussbock (19) an der anderen Oberseite mit einem Verstärkungselement (25), vorzugsweise einem Verstärkungsblech, versteift ist, das einen Bestandteil des Fahrzeugaufbaus bildet.

7. Instrumententafelanordnung nach einem der Ansprüche 1 bis 6, **dadurch gekennzeichnet, dass** jeder der Anschlussböcke (19) an einer A-Säule des Fahrzeugs anbringbar ist.

8. Instrumententafelanordnung nach einem der Ansprüche 5 bis 7, **dadurch gekennzeichnet, dass** jeder Anschlussbereich (12) des Montagequerträgers (10) durch eine vorzugsweise endseitig daran angeordnete und dem jeweiligen Anschlussbock (19) zugeordnete Anschlussplatte (13) mit einem darauf im Randbereich U-förmig umlaufenden Montagequerträger-Randsteg (14) ausgebildet ist,
dass die U-Basis des Montagequerträger-Randstegs (14) Toleranzausgleichsmittel (16, 17, 18) umfasst und der jeweiligen Halteeinrichtung (3) sowie dem jeweiligen Anschlussbock (19) zugeordnet ist, und
dass der Montagequerträger-Randsteg (14) im endmontierten Zustand den Anschlussbock-Randsteg (21) oder entsprechend umgekehrt der Anschlussbock-Randsteg (21) den Montagequerträger-Randsteg (14) in einer Anlageverbindung umgreift.

9. Instrumententafelanordnung nach einem der Ansprüche 1 bis 8, **dadurch gekennzeichnet, dass** der Montagequerträger (10) durch ein mindestens einteiliges, vorzugsweise zylinderförmiges Rohrstück (11) gebildet ist.

10. Instrumententafelanordnung nach einem der Ansprüche 1 bis 9, **dadurch gekennzeichnet,**
**dass** jede Halteeinrichtung durch einen Halterahmen (3), vorzugsweise aus Blech, gebildet ist, der mit einem Rahmenteil (4) mit der Instrumententafel (1), vorzugsweise mittels einer Schraub- und/oder Clip- und/oder Nietverbindung, verbindbar ist, und
**dass** ein weiteres Rahmenteil (5) vorzugsweise leistenförmig ausgebildet und mit Toleranzausgleichsmitteln (6, 7, 8) einem Anschlussbereich (12) des Montagequerträgers (10) sowie dem jeweiligen Anschlussbock (19) zugeordnet ist.

11. Verfahren zur Montage einer Instrumententafelanordnung, nach einem der Ansprüche 1 bis 10, in einem Fahrzeug, bei dem ein Montagequerträger mittels wenigstens einer Halteeinrichtung mit einer Instrumententafel verbunden und die gesamte Instrumententafelanordnung an in Fahrzeugquerrichtung gesehen gegenüberliegenden Seiten über je ein Anschlussmittel am Fahrzeugaufbau festgelegt wird, **dadurch gekennzeichnet,**
**dass** in einem Vormontageschritt der Montagequerträger (10) über an der Instrumententafel (1) jeweils vorzugsweise endseitig angeordnete Halteeinrichtungen (3) mit der Instrumententafel (1) unter Toleranzausgleich durch an den Halteeinrichtungen (3) und an Anschlussbereichen (12) des Montagequerträgers (10) ausgebildete erste Toleranzausgleichsmittel (7, 18) spannungsfrei zu einer Vormontageeinheit (26) verbunden wird,
**dass** in einem ersten Endmontageschritt die als separate Bauteile ausgebildeten Anschlussböcke (19) am Fahrzeugaufbau, vorzugsweise in Fahrzeuglängsrichtung und in Fahrzeughochachsenrichtung ausgerichtet, angebracht werden, und
**dass** in einem zweiten Endmontageschritt die im Vormontageschritt spannungsfrei vormontierte Vormontageeinheit (26) über die Halteeinrichtungen (3) unter Toleranzausgleich, vorzugsweise wenigstens in Fahrzeugquerrichtung, durch an den Halteeinrichtungen (3) und an den Anschlussböcken (19) ausgebildete zweite Toleranzausgleichsmittel (6, 8, 23, 24) spannungsfrei an den Anschlussböcken (19) und damit am Fahrzeugaufbau festgelegt wird.

## Claims

1. Dashboard arrangement in a vehicle, especially a motor vehicle, having an assembly crossmember, which, in the fitted state, runs approximately in the transverse direction of the vehicle and on which a dashboard is secured by means of at least one retaining device, it being possible for the dashboard arrangement, as seen in the transverse direction of the vehicle, to be secured on the vehicle body on opposite sides via respective connecting means, a respective retaining device (3) being arranged on the dashboard (1), on opposite end regions, as seen in the longitudinal direction of the dashboard, and a respective connecting region (12), which is respectively assigned to one of the retaining devices (3), being arranged on the assembly crossmember (10), preferably on the end sides, **characterized in that** the connecting means are designed as separate connecting brackets (19) which can be oriented preferably in the direction of the longitudinal axis and/or vertical axis of the vehicle and are assigned in each case to one of the retaining devices (3), **in that** the assembly crossmember (10) is connectable in a stress-free manner to the dashboard (1) via the retaining devices (3) to form a preassembly unit (26), with tolerances being compensated for by means of first tolerance-compensating means (7, 18) formed on the retaining devices (3) and on the connecting region (12) of the assembly crossmember (10), and **in that** the preassembly unit (26), which is preassembled in a stress-free manner, can be secured in a stress-free manner on the connecting brackets (19) and therefore on the vehicle body via the retaining devices (3), with tolerances being compensated for, preferably at least in the transverse direction of the vehicle, by means of second tolerance-compensating means (6, 8, 23, 24) formed on the retaining devices (3) and on the connecting brackets (19).

2. Dashboard arrangement according to Claim 1, **characterized in that** at least one elongated preassembly hole (7), which, with regard to the fitted state, is preferably oriented in the transverse direction of the vehicle, is arranged on the retaining devices (3) as tolerance-compensating means via which the dashboard (1) can be connected, preferably can be screwed, in a stress-free manner, with tolerances being compensated for, to a stud bolt (18), preferably a screw bolt, as tolerance-compensating means of the connecting region (12) of the assembly crossmember (10).

3. Dashboard arrangement according to Claim 1 or 2, **characterized in that** at least one elongated final assembly hole (6, 8), which, with regard to the fitted state, is preferably oriented in the transverse direction of the vehicle, is arranged on the retaining devices (3) as tolerance-compensating means, **in that** in each case at least one stud bolt (23, 24) is arranged on the connecting brackets (19) as tolerance-compensating means and is preferably oriented in the longitudinal direction of the vehicle and is assigned at least one elongated final assembly hole (6, 8) in such a manner that the at least one stud bolt (23, 24) penetrates the at least one elongated final assembly hole (6, 8) in the finally fitted state of the dashboard arrangement (2), with it being possible, by means of the excessive size of the elongated hole (6, 8, 16, 17) in relation to the diameter of the stud bolt, for a compensation of tolerances to be carried out, preferably at least in the transverse direction of the vehicle, in order to realize a stress-free final assembly of the preassembly unit (26) on the vehicle body.

4. Dashboard arrangement according to Claim 3, **characterized in that** the at least one first elongated final assembly hole (6, 8) is respectively assigned a second elongated final assembly hole (16, 17), which is oriented and formed in an approximately corresponding manner, as tolerance-compensating means on the connecting region (12) of the assembly crossmember (10), in the prefitted state of the preassembly unit (26) the first elongated final assembly hole (6, 8) being adjacent to the retaining devices (3), preferably contiguous to them, and being arranged approximately in alignment with the second elongated final assembly hole (16, 17) of the assembly-crossmember connecting regions (12), and **in that**, in the finally fitted state of the dashboard arrangement (2), the at least one stud bolt (23, 24) penetrates the first and second elongated final assembly holes (6, 8, 16, 17), with it being possible, by means of the excessive size of the elongated holes (6, 8, 16, 17) in relation to the diameter of the stud bolt, for a compensation of tolerances to be carried out, preferably at least in the transverse direction of the vehicle, in order to realize a stress-free final assembly of the preassembly unit (26) on the vehicle body.

5. Dashboard arrangement according to one of Claims 1 to 4, **characterized in that** the connecting brackets (19) are formed from a connecting plate (20) having a connecting-bracket edge web (21) which runs around the edge region of one of the upper sides in a U-shaped manner, and **in that** the U-base (22) of the connecting-bracket edge web (21) comprises tolerance-compensating means (23, 24) assigned to the particular retaining device (3).

6. Dashboard arrangement according to Claim 5, **characterized in that** each connecting bracket (19) is stiffened on the other upper side by a reinforcing element (25), preferably a reinforcing sheet, which forms part of the vehicle body.

7. Dashboard arrangement according to one of Claims 1 to 6, **characterized in that** each of the connecting brackets (19) can be attached to an A-pillar of the vehicle.

8. Dashboard arrangement according to one of Claims 5 to 7, **characterized in that** each connecting region (12) of the assembly crossmember (10) is formed by a connecting plate (13), which is arranged thereon, preferably on the end side, and is assigned to the particular connecting bracket (19) and has an assembly-crossmember edge web (14) running around the edge region thereof in a U-shaped manner, **in that** the U-base of the assembly-crossmember edge web (14) comprises tolerance-compensating means (16, 17, 18) and is assigned to the particular retaining device (3) and to the particular connecting bracket (19), and **in that**, in the finally fitted state, the assembly-crossmember edge web (14) engages around the connecting-bracket edge web (21), or, correspondingly conversely, the connecting-bracket edge web (21) engages around the assembly-crossmember edge web (14), in a bearing connection.

9. Dashboard arrangement according to one of Claims 1 to 8, **characterized in that** the assembly crossmember (10) is formed by an at least single-part, preferably cylindrical tubular element (11).

10. Dashboard arrangement according to one of Claims 1 to 9, **characterized in that** each retaining device is formed by a retaining frame (3), preferably of sheet metal, which can be connected to the dashboard (1) by a frame part (4), preferably by means of a screw connection and/or clip connection and/or rivet connection, and **in that** a further frame part (5) is preferably of strip-shaped design and is assigned, together with tolerance-compensating means (6, 7, 8), to a connecting region (12) of the assembly crossmember (10) and to the particular connecting bracket (19).

11. Method of assembly of a dashboard arrangement according to one of Claims 1 to 10, in a vehicle, in which an assembly crossmember is connected to a dashboard by means of at least one retaining device and the entire dashboard arrangement is secured on opposite sides, as seen in the transverse direction of the vehicle, on the vehicle body via respective connecting means, **characterized in that**, in a preassembly step, the assembly crossmember (10) is connected in a stress-free manner to the dashboard (1) via retaining devices (3), which are in each case arranged, preferably on the end side, on the dashboard (1), to form a preassembly unit (26), with tolerances being compensated for by means of first tolerance-compensating means (7, 18) formed on the retaining devices (3) and on the connecting regions (12) of the assembly crossmember (10), **in that**, in a first final assembly step, the connecting brackets (19), which are designed as separate components, are attached to the vehicle body, preferably oriented in the longitudinal direction of the vehicle and in the direction of the vertical axis of the vehicle, and **in that**, in a second final assembly step, the preassembly unit (26), which is prefitted in a stress-free manner in the preassembly step, is secured in a stress-free manner on the connecting brackets (19) and therefore on the vehicle body via the retaining devices (3), with tolerances being compensated for, preferably at least in the transverse direction of the vehicle, by means of second tolerance-compensating means (6, 8, 23, 24) formed on the retaining devices (3) and on the connecting brackets (19).

## Revendications

1. Agencement de tableau de bord sur un véhicule, notamment un véhicule automobile, comprenant un support transversal de montage s'étendant dans l'état monté approximativement dans la direction transversale du véhicule, sur lequel est fixé un tableau de bord au moyen d'au moins un dispositif de fixation, l'agencement de tableau de bord, vu dans la direction transversale du véhicule, pouvant être fixé sur des côtés opposés par le biais d'un moyen de raccordement respectif sur la carrosserie du véhicule, un dispositif de fixation respectif (3) étant disposé sur des régions d'extrémité opposées, vues dans la direction longitudinale du tableau de bord, sur le tableau de bord (1), et une région de raccordement respective (12) étant disposée de préférence du côté de l'extrémité sur le support transversal de montage (10), laquelle est associée à chacun des dispositifs de fixation (3), **caractérisé en ce que** les moyens de raccordement sont réalisés sous la forme de blocs de raccordement (19) séparés pouvant être orientés de préférence dans la direction de l'axe longitudinal du véhicule et/ou dans la direction de l'axe vertical du véhicule, lesquels sont associés à chacun des dispositifs de fixation (3), **en ce que** le support transversal de montage (10) peut être connecté sans contrainte par le biais des dispositifs de fixation (3) au tableau de bord (1) en compensant les tolérances par des premiers moyens de compensation des tolérances (7, 18) réalisés sur les dispositifs de fixation (3) et sur la région de raccordement (12) du support transversal de montage (10), pour former une unité de prémontage (26), et **en ce que** l'unité de prémontage (26) prémontée sans contrainte peut être fixée sans contrainte sur les blocs de raccordement (19) et par conséquent sur la carrosserie du véhicule, par le biais des dispositifs de fixation (3) en compensant les tolérances, de préférence au moins dans la direction transversale du véhicule, par des deuxièmes moyens de compensation des tolérances (6, 8, 23, 24) réalisés sur les dispositifs de fixation (3) et sur les blocs de raccordement (19).

2. Agencement de tableau de bord selon la revendication 1, **caractérisé en ce qu'**au moins un trou oblong de prémontage (7) servant de moyen de compensation des tolérances, orienté de préférence dans la direction transversale du véhicule par rapport à l'état monté, est prévu sur les dispositifs de fixation (3) et permet de connecter le tableau de bord (1), de préférence par vissage, sans contrainte et en compensant les tolérances, à un goujon (18), de préférence un goujon fileté, servant de moyen de compensation des tolérances de la région de raccordement (12) du support transversal de montage (10).

3. Agencement de tableau de bord selon la revendication 1 ou 2, **caractérisé en ce qu'**au moins un trou oblong de montage final (6, 8), servant de moyen de compensation des tolérances, orienté de préférence dans la direction transversale du véhicule par rapport à l'état monté, est prévu sur les dispositifs de fixation (3), **en ce qu'**à chaque fois au moins un goujon (23, 24) servant de moyen de compensation des tolérances est disposé sur les blocs de raccordement (19), lequel est orienté de préférence dans la direction longitudinale du véhicule et est associé à l'au moins un trou oblong de montage final (6, 8), de telle sorte que l'au moins un goujon (23, 24), dans l'état monté final de l'agencement de tableau de bord (2), traverse l'au moins un trou oblong de montage final (6, 8), le surdimensionnement du trou oblong (6, 8, 16, 17) par rapport au diamètre du goujon assurant une compensation des tolérances de préférence au moins dans la direction transversale du véhicule pour un montage final sans contrainte de l'unité de prémontage (26) sur la carrosserie du véhicule.

4. Agencement de tableau de bord selon la revendication 3, **caractérisé en ce qu'**à l'au moins un premier trou oblong de montage final (6, 8) est associé à chaque fois un deuxième trou oblong de montage final (16, 17) orienté et réalisé de manière sensiblement correspondante, servant de moyen de compensation des tolérances, sur la région de raccordement (12) du support transversal de montage (10), le premier trou oblong de montage final (6, 8), dans l'état prémonté de l'unité de prémontage (26), étant disposé à proximité, de préférence contre, et approximativement en affleurement avec le deuxième trou oblong de montage final (16, 17) des régions de raccordement (12) du support transversal de montage et **en ce que** l'au moins un goujon (23, 24), dans l'état monté final de l'agencement de tableau de bord (2), traverse le premier et le deuxième trou oblong de montage final (6, 8, 16, 17), le surdimensionnement des trous oblongs (6, 8, 16, 17) par rapport au diamètre du goujon assurant une compensation des tolérances de préférence au moins dans la direction transversale du véhicule pour un montage final sans contrainte de l'unité de prémontage (26) sur la carrosserie du véhicule.

5. Agencement de tableau de bord selon l'une quelconque des revendications 1 à 4, **caractérisé en ce que** les blocs de raccordement (19) sont réalisés à partir d'une plaque de raccordement (20) avec une aile de bordure (21) du bloc de raccordement s'étendant tout autour en forme de U sur l'un des côtés supérieurs dans la région des bords, et **en ce que** la base du U (22) de l'aile de bordure (21) du bloc de raccordement comprend des moyens de compensation des tolérances (23, 24) qui sont associés au dispositif de fixation respectif (3).

6. Agencement de tableau de bord selon la revendication 5, **caractérisé en ce que** chaque bloc de raccordement (19) est renforcé sur l'autre côté supérieur avec un élément de renforcement (25), de préférence une tôle de renforcement, qui forme un constituant de la carrosserie du véhicule.

7. Agencement de tableau de bord selon l'une quelconque des revendications 1 à 6, **caractérisé en ce que** chacun des blocs de raccordement (19) peut être monté sur une colonne A du véhicule.

8. Agencement de tableau de bord selon l'une quelconque des revendications 5 à 7, **caractérisé en ce que** chaque région de raccordement (12) du support transversal de montage (10) est réalisée par une plaque de raccordement (13) disposée sur celui-ci de préférence du côté de l'extrémité et associée à chaque bloc de raccordement (19), avec une aile de bordure (14) du support transversal de montage s'étendant tout autour en forme de U sur celle-ci dans la région du bord, **en ce que** la base du U de l'aile de bordure (14) du support transversal de montage comprend des moyens de compensation des tolérances (16, 17, 18) et est associée à chaque dispositif de fixation (3) ainsi qu'à chaque bloc de raccordement (19) et **en ce que** l'aile de bordure (14) du support transversal de montage vient en prise, dans l'état monté final, autour de l'aile de bordure (21) du bloc de raccordement ou inversement et de manière correspondante, l'aile de bordure (21) du bloc de raccordement vient en prise autour de l'aile de bordure (14) du support transversal de montage dans une connexion en appui.

9. Agencement de tableau de bord selon l'une quelconque des revendications 1 à 8, **caractérisé en ce que** le support transversal de montage (10) est formé par une pièce tubulaire (11) au moins d'une seule pièce, de préférence de forme cylindrique.

10. Agencement de tableau de bord selon l'une quelconque des revendications 1 à 9, **caractérisé en ce que** chaque dispositif de fixation est formé par un cadre de fixation (3), de préférence en tôle, qui peut être connecté par une partie de cadre (4) au tableau de bord (1), de préférence au moyen d'une connexion par vissage et/ou par enclipsage et/ou par rivetage et **en ce qu'**une autre partie de cadre (5) est réalisée de préférence en forme de barre et est associée, par des moyens de compensation des tolérances (6, 7, 8), à une région de raccordement (12) du support transversal de montage (10) ainsi qu'au bloc de raccordement respectif (19).

11. Procédé de montage d'un agencement de tableau de bord selon l'une quelconque des revendications 1 à 10, dans un véhicule, dans lequel un support transversal de montage est connecté au moyen d'au moins un dispositif de fixation à un tableau de bord et l'ensemble de l'agencement de tableau de bord, vu dans la direction transversale du véhicule, est fixé sur la carrosserie du véhicule par des côtés opposés par le biais d'un moyen de raccordement respectif, **caractérisé en ce que** dans une étape de prémontage, le support transversal de montage (10) est connecté au tableau de bord (1) sans contrainte, pour former une unité de prémontage (26), par le biais de dispositifs de fixation (3) disposés sur le tableau de bord (1) à chaque fois de préférence du côté de l'extrémité, en compensant les tolérances par des premiers moyens de compensation des tolérances (7, 18) réalisés sur les dispositifs de fixation (3) et sur des régions de raccordement (12) du support transversal de montage (10), **en ce que** dans une première étape de montage final, les blocs de raccordement (19) réalisés sous forme de composants séparés sont montés sur la carrosserie du véhicule, orientés de préférence dans la direction longitudinale du véhicule et dans la direction de l'axe vertical du véhicule, et **en ce que** dans une deuxième étape de montage final, l'unité de prémontage (26) prémontée sans contrainte dans l'étape de prémontage est fixée sans contrainte sur les blocs de raccordement (19) et par conséquent sur la carrosserie du véhicule, par le biais des dispositifs de fixation (3) en compensant les tolérances, de préférence au moins dans la direction transversale du véhicule, par des deuxièmes moyens de compensation des tolérances (6, 8, 23, 24) réalisés sur les dispositifs de fixation (3) et sur les blocs de raccordement (19).
